# EUROPÄISCHE PATENTSCHRIFT

(11) **EP 2 833 038 B1**
(45) Veröffentlichungstag und Bekanntmachung des Hinweises auf die Patenterteilung: **09.05.2018**
(21) Anmeldenummer: 13003759.1
(22) Anmeldetag: 29.07.2013
(51) Int. Cl.: F16K 31/02

(54) **Ventil für feldsensitive Flüssigkeiten und hydraulische Anlage mit einem solchen Ventil**
Valve for field sensitive liquids and hydraulic system with such a valve
Soupape pour liquides sensibles aux champs et installation hydraulique dotée d'une telle soupape

(43) Veröffentlichungstag der Anmeldung: 04.02.2015
(73) Patentinhaber: Helmut-Schmidt-Universität Hamburg, 22043 Hamburg (DE); Hamburg Innovation GmbH, 21079 Hamburg (DE)
(72) Erfinder: Bruns, Prof. Dr.-Ing. Rainer, 22395 Hamburg (DE); Ulrich, Dr.-Ing. Stephan, 22147 Hamburg (DE); Krivenkov, Konstantin, 21033 Hamburg (DE); Freyer, Holger, 24161 Altenholz (DE); Isermann, Jan, 28215 Bremen (DE)
(74) Vertreter: Hausfeld, Norbert

(56) Entgegenhaltungen:
- EP-A1- 0 547 866
- US-A- 5 241 991
- US-A- 5 353 839

## Beschreibung

Die Erfindung betrifft ein Ventil für feldsensitive Flüssigkeiten mit einem Ventilkanal und wenigstens einem Koppelelement zum Einkoppeln eines Steuerfeldes in den Ventilkanal. Weiterhin betrifft die Erfindung eine hydraulische Anlage mit einem solchen Ventil.

Bei der Steuerung von hydraulischen Anlagen werden gewöhnlich Stellventile verwendet, um Volumenströme von unter hohem Druck stehender Hydraulikflüssigkeit zu kontrollieren. Herkömmliche Stellventile weisen dazu in der Regel einen Ventilkanal auf, in welchem ein Steuerkörper zur Veränderung des Strömungsquerschnitts beweglich ist. Die Bewegung des Steuerkörpers erfolgt dabei über Stellantriebe wie Servomotoren oder elektromagnetische Aktuatoren, oder über direkten Angriff von Magnetkräften. Beispiele solcher Ventile zeigen die US 5,353,839A, die EP 0 547 855 A1 und die US 5,241,991 A.

In jüngerer Zeit finden vermehrt feldsensitive Flüssigkeiten in der Hydraulik Anwendung. Unter feldsensitiven Flüssigkeiten im Sinne der Erfindung werden dabei Flüssigkeiten verstanden, deren Viskosität sich durch Einwirkung eines elektrischen oder magnetischen Feldes verändert. Solche Flüssigkeiten werden auch als elektro- oder magnetorheologische Flüssigkeiten bezeichnet. Für solche feldsensitiven Flüssigkeiten wurden Ventile entwickelt, welche wenigstens ein Koppelelement zum Einkoppeln eines Steuerfeldes in den Ventilkanal aufweisen. Durch das eingekoppelte Steuerfeld kann die Viskosität der feldsensitiven Flüssigkeit erhöht und damit die Strömung der Flüssigkeit gedrosselt werden.

Anders als bei herkömmlichen Ventilen ist der Stellbereich bei den beschriebenen Ventilen für feldsensitive Flüssigkeiten allerdings stark eingeschränkt. So müssen in modernen Hydraulikanlagen oftmals Betriebsdrücke von mehr als 100 bar geschaltet werden. Um eine solche Druckdifferenz mittels eines solchen Ventils schalten zu können, müsste der Ventilkanal sehr lang sein, was technisch oft ungeeignet ist.

Ebenso ist es bei solchen Ventilen nicht möglich, den Ventilkanal vollständig zu schließen, da gerade bei elektrorheologischen Flüssigkeiten zur Vermeidung elektrischer Durchschläge ein ständiger Durchfluss gewährleistet sein muss. Dies schränkt die Verwendungsmöglichkeiten der Ventile noch weiter ein.

Es besteht daher die Aufgabe der Erfindung darin, ein Ventil für feldsensitive Flüssigkeiten bereitzustellen, welches die genannten Nachteile nicht aufweist.

Diese Aufgabe wird gemäß der Erfindung gelöst durch ein Ventil für feldsensitive Flüssigkeiten mit einem Ventilkanal und wenigstens einem Koppelelement zum Einkoppeln eines Steuerfeldes in den Ventilkanal, welches dadurch weitergebildet ist, dass das Ventil einen gegen die Kraft eines Rückstellfederelementes zur Veränderung des Strömungsquerschnitts beweglichen Steuerkörper aufweist, welcher durch Einwirkung der feldsensitiven Flüssigkeit bewegbar ist. Das Rückstellfederelement des Steuerkörpers kann z.B. eine nichtlineare Kennlinie aufweisen, um eine Nichtlinearität des Ventilverhaltens zu verringern oder gänzlich zu vermeiden.
Erfindungsgemäß erfolgt die Bewegung des Steuerkörpers durch den statischen Druck der feldsensitiven Flüssigkeit.

Die Erfindung beruht dabei auf der Erkenntnis, dass die Bewegung eines von herkömmlichen Ventiltypen bekannten Steuerkörpers nicht nur über aufwendige Aktuatoren erfolgen kann, sondern auch durch unmittelbare Einwirkung der feldsensitiven Flüssigkeit auf den Steuerkörper. Dabei wird der Effekt ausgenutzt, dass eine von der strömenden Flüssigkeit auf den Steuerkörper ausgeübte Kraft stark von der Viskosität der Flüssigkeit abhängig ist. Wird diese Viskosität durch Ausnutzung der feldsensitiven Eigenschaft der Flüssigkeit verändert, so verändert sich auch die auf den Steuerkörper ausgeübte Kraft, wodurch sich dieser unter Kompression bzw. Expansion des Rückstellfederelementes verschiebt. Die Verschiebung kann durch entsprechende Anordnung des Steuerkörpers so erfolgen, dass sie zur Veränderung der Strömungsquerschnitts im Ventilkanal führt, also z.B. zu einer Verengung oder zu einer Erweiterung des Strömungsquerschnitts.

Dieser Effekt ist gewissermaßen mit der Funktion bekannter Rückschlag- oder Überdruckventile vergleichbar, in welchen durch die Einwirkung eines Fluids ein Steuerkörper bewegt wird und damit das Ventil öffnet (Überdruckventil) oder schließt (Rückschlagventil). Allerdings erfolgt bei solchen bekannten Ventilen keine Beeinflussung der Viskosität.

Gemäß einer bevorzugten Ausgestaltung der Erfindung ist wenigstens ein Koppelelement an dem Steuerkörper angeordnet. Dadurch kann die Beeinflussung der feldsensitiven Flüssigkeit unmittelbar an dem Steuerkörper erfolgen, was ein besonders schnelles Ansprechverhalten des Ventils ermöglicht.

In einer anderen Ausführungsform der Erfindung erfolgt die Bewegung des Steuerkörpers durch die Schubkraft der feldsensitiven Flüssigkeit. Unter der Schubkraft wird im Sinne der Erfindung die in Strömungsrichtung der Flüssigkeit auf den Steuerkörper wirkende Kraft verstanden, welche durch die zwischen der Flüssigkeit und der Oberfläche des Steuerkörpers auftretende Reibung entsteht.

In einer Variante der Erfindung ist der Steuerkörper als eine Trennwand zwischen dem Ventilkanal und einer druckseitig mit dem Ventilkanal verbundenen Druckkammer ausgeformt. Dabei stellt sich zwischen der Druckkammer und dem Ventilkanal eine Druckdifferenz ein, welche von dem dynamischen Druckverlust der feldsensitiven Flüssigkeit in dem Ventilkanal abhängig ist. Wird nun durch Einkoppeln eines Steuerfeldes in den Ventilkanal die Viskosität der Flüssigkeit erhöht, so steigt der dynamische Druckverlust und damit die Druckdifferenz an, und der Steuerkörper wird in Richtung des Ventilkanals gedrückt. Dadurch verengt sich der Ventilkanal, so dass die strömungsvermindernde Wirkung des Steuerfeldes verstärkt wird.

In einer weiteren Variante der Erfindung ist der Steuerkörper als Keil ausgeführt, welcher durch den statischen Druck der feldsensitiven Flüssigkeit entlang einer schiefen Ebene bewegbar ist. Dabei wirkt zwischen der Zustromseite und der Abstromseite des Steuerkörpers durch die Druckdifferenz eine Schubkraft, welche bei Einkoppeln eines Steuerfeldes verstärkt wird und eine Verschiebung des Steuerkörpers entlang der schiefen Ebene bewirkt. Dadurch wird wiederum der Ventilkanal verengt.

Für eine Regelung oder Steuerung der Ventilfunktion kann es vorteilhaft sein, wenn wenigstens ein Sensor vorgesehen ist, um die Position des Steuerkörpers zu messen. Bevorzugt sind zwei Sensoren vorgesehen, um die Position des Steuerkörpers in Strömungsrichtung und quer zur Strömungsrichtung zu bestimmen. Über die ermittelte Position des Steuerkörpers kann z.B. die Stärke des Steuerfeldes geregelt bzw. gesteuert werden.

In einer anderen Ausführungsvariante sin der Steuerkörper und der Ventilkanal konisch ausgeführt und der Steuerkörper ist durch Einwirkung der feldsensitiven Flüssigkeit zur Veränderung des freien Strömungsquerschnitts des Ventilkanals in Strömungsrichtung bewegbar. In dieser Ausführungsvariante entsteht wiederum ein Druckgefälle über die Länge des konischen Steuerkörpers, wodurch dieser gegen die Kraft einer Rückstellfeder in Strömungsrichtung gedrückt wird.

Auch in dieser Ausführungsvariante kann es sinnvoll sein, die Position des Steuerkörpers über einen oder mehrere Sensoren zu bestimmen, um eine Regelung des Ventils zu ermöglichen.

Gemäß einer Weiterbildung der Erfindung kann der Steuerkörper im Bereich des Koppelelements konisch ausgeführt sein. In diesem Fall ergibt sich ebenfalls eine Verengung des Strömungskanals bei Bewegung des Steuerkörpers.

Gemäß einer anders gearteten Weiterbildung kann der Steuerkörper außerhalb des Bereichs des Koppelelements konisch ausgeführt sein. In diesem Fall bleibt der Abstand der Koppelelemente unverändert, hierdurch verhält sich das Ventil linear und ist besonders einfach zu steuern bzw. zu regeln.

In einer weiteren Ausgestaltung der Erfindung weisen der Ventilkanal und der Steuerkörper eine stufenförmige Verjüngung auf, welche als Strömungsblende wirkt. Unter einer Strömungsblende wird im Sinne der Erfindung ein Abschnitt des Ventilkanals verstanden, welcher vollständig verschlossen wird, wenn der Abschnitt des Steuerkörpers mit dem größeren Durchmesser in den Abschnitt des Ventilkanals mit dem geringeren Durchmesser eintaucht.

Gemäß einer besonderen Weiterbildung der Erfindung zweigt auf der Abstromseite des Steuerkörpers von dem Ventilkanal eine Bypassleitung ab. Diese Bypassleitung ermöglicht auch bei weitgehend oder komplett geschlossenem Ventil einen definierten Strom von feldsensitiver Flüssigkeit entlang des Koppelelementes. Durch diese Maßnahme kann zum einen verhindert werden, dass es bei stehender Flüssigkeit zu einem Kurzschluss des Steuerfeldes kommt. Unter einem Kurzschluss ist dabei hauptsächlich eine Aneinanderlagerung von in der Flüssigkeit dispergierten Partikeln zu verstehen, durch welche es zu einer leitenden Verbindung kommen könnte.

Ebenso bleibt durch den Strom der Flüssigkeit über die Bypassleitung die Schubkraft auf den Steuerkörper bestehen, so dass auch ein dauerhaftes Schließen des Ventils durch die Schubkraft erfolgen kann.

In einer Variante der Erfindung ist das Ventil so ausgeführt, dass der Steuerkörper gegen die Kraft des Rückstellfederelementes zur Verengung des freien Strömungsquerschnitts bewegbar ist.

In einer anderen Variante der Erfindung ist das Ventil so ausgeführt, dass der Steuerkörper gegen die Kraft des Rückstellfederelementes zur Erweiterung des freien Strömungsquerschnitts bewegbar ist.

Die Erfindung wird im Nachfolgenden anhand einiger Zeichnungen näher erläutert. Es zeigen:
- Fig.1:: eine prinzipienhafte Darstellung eines ersten Ausführungsbeispiels eines erfindungsgemäßen Ventils;
- Fig. 2:: eine prinzipienhafte Darstellung eines zweiten Ausführungsbeispiels eines erfindungsgemäßen Ventils;
- Fig.3:: eine prinzipienhafte Darstellung eines dritten Ausführungsbeispiels eines erfindungsgemäßen Ventils;
- Fig.4:: eine prinzipienhafte Darstellung eines vierten Ausführungsbeispiels eines erfindungsgemäßen Ventils;
- Fig.5:: eine prinzipienhafte Darstellung eines fünften Ausführungsbeispiels eines erfindungsgemäßen Ventils;
- Fig.6:: eine prinzipienhafte Darstellung eines sechsten Ausführungsbeispiels eines erfindungsgemäßen Ventils;
- Fig.7:: eine prinzipienhafte Darstellung eines Hydrauliksystems mit einem siebten Ausführungsbeispiel eines erfindungsgemäßen Ventils;
- Fig. 8:: eine prinzipienhafte Darstellung eines achten Ausführungsbeispiels eines erfindungsgemäßen Ventils;
- Fig. 9:: eine prinzipienhafte Darstellung eines neunten Ausführungsbeispiels eines erfindungsgemäßen Ventils;
- Fig. 10:: eine prinzipienhafte Darstellung eines Hydrauliksystems mit einem zehnten Ausführungsbeispiel eines erfindungsgemäßen Ventils;
- Fig. 11:: eine prinzipienhafte Darstellung eines elften Ausführungsbeispiels eines erfindungsgemäßen Ventils; und
- Fig. 12:: eine prinzipienhafte Darstellung eines zwölften Ausführungsbeispiels eines erfindungsgemäßen Ventils.

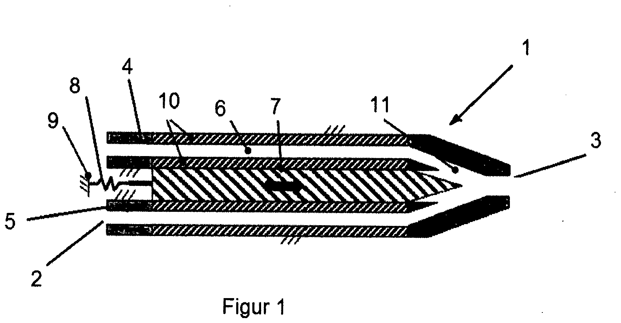

Figur 1 zeigt ein Ventil 1 für feldsensitive Flüssigkeiten mit einer Zustromseite 2 und einer Abstromseite 3. Das Ventil weist ein Außengehäuse 4 und ein Innengehäuse 5 auf, die zwischen sich einen Ventilkanal 6 einschließen.

In dem Innengehäuse 5 ist ein Steuerkörper 7 beweglich angeordnet. Der Steuerkörper 7 steht an der Zustromseite 2 und der Abstromseite 3 in Kontakt zum Ventilkanal 6.

Im Betrieb des Ventils 1 strömt die feldsensitive Flüssigkeit durch den Ventilkanal 6.Dabei entsteht zwischen der Zustromseite 2 und der Abstromseite 3 ein Druckgefälle, durch welches der Steuerkörper 7 eine Kraft in Richtung der Abstromseite 3 erfährt. Um diese Kraft zu kompensieren ist der Steuerkörper 7 über eine Rückstellfeder 8 an einem Widerlager 9 befestigt.

Am Außengehäuse 4 und am Innengehäuse 5 des Ventils sind Koppelelemente 10 angeordnet, über welche ein Steuerfeld in den Ventilkanal 6 eingekoppelt werden kann. Diese Koppelelemente 10 können Elektroden sein, wenn es sich bei der feldsensitiven Flüssigkeit um eine elektrorheologische Flüssigkeit handelt. Falls es sich um eine magnetorheologische Flüssigkeit handelt, sind die Koppelelemente 10 als Magnetanker ausgeführt.

Zum Schalten des Ventils 1 werden die Koppelelemente 10 über geeignete, nicht dargestellte Aktivierungselemente aktiviert, um das Steuerfeld zu erzeugen. Durch die Einwirkung des Steuerfeldes wird die Viskosität der feldsensitiven Flüssigkeit erhöht, was zur Folge hat, dass das Druckgefälle über die Länge des Ventilkanals 6 ansteigt. Damit steigt auch die auf den Steuerkörper 7 wirkende Kraft in Richtung der Abstromseite 3, so dass dieser gegen die Kraft der Rückstellfeder 8 in Richtung der Abstromseite 3 verschoben wird.

Durch die Verschiebung des Steuerkörpers 7 wird der Ventilkanal 6 in seinem konischen Endbereich 11 verengt. Durch diese zusätzliche Verengung des Ventilkanals 6 wird die eine Strömung der feldsensitiven Flüssigkeit erschwerende Wirkung des Steuerfeldes verstärkt, so dass der Stellbereich des Ventils 1 gegenüber herkömmlichen Ventilen für feldsensitive Flüssigkeiten deutlich vergrößert ist, und auch größere Druckdifferenzen in Ventilkanälen 6 kürzerer Bauart geschaltet werden können.

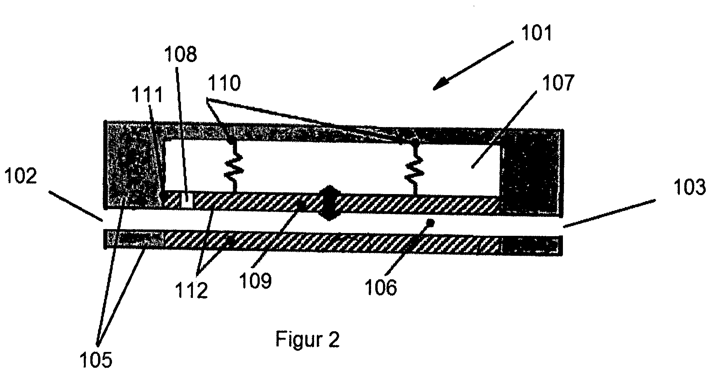

Figur 2 zeigt eine andere Ausführung der Erfindung. Das Ventil 101 weist wiederum eine Zustromseite 102 und eine Abstromseite 103 auf und besteht aus einem Gehäuse 105, welches einen Ventilkanal 106 umschließt. In dem Gehäuse 105 ist eine Druckkammer 107 vorgesehen, welche über einen Durchbruch 108 mit dem Ventilkanal 106 verbunden ist. Zwischen dem Ventilkanal 106 und der Druckkammer 107 ist ein als Trennwand fungierender Steuerkörper 109 angeordnet.

Im Betrieb des Ventils 101 strömt eine feldsensitive Flüssigkeit durch den Ventilkanal 106. Dabei entsteht über die Länge des Ventilkanals 106 ein Druckgefälle. Der an der Zustromseite 102 des Ventils 101 anstehende Druck herrscht dabei auch in der Druckkammer 107, so dass auf der Abstromseite 103 in dem Ventilkanal 106 ein geringerer Druck herrscht als in der Druckkammer 107. Dadurch wirkt auf den Steuerkörper 109 eine Kraft in Richtung des Ventilkanals, 106 welche im normalen Betrieb durch Rückstellfedern 110 kompensiert wird.

Am Rand 111 des Steuerkörpers ist dieser mittels nicht dargestellter Dichtungen gegen das Gehäuse 105 abgedichtet. Dabei kann es sich z.B. um Balgdichtungen oder Gleitdichtungen handeln.

Am Steuerkörper 109 und an einer dem Steuerkörper 109 gegenüberliegenden Stelle des Gehäuses 105 sind Koppelelemente 112 angeordnet, über die ein Steuerfeld in den Ventilkanal 106 eingekoppelt werden kann. Wird durch dieses Steuerfeld die Viskosität der feldsensitiven Flüssigkeit erhöht, so steigt die Druckdifferenz zwischen dem Ventilkanal 106 und der Druckkammer 107 an. Die resultierende Kraft auf den Steuerkörper 109 wird größer als die Kraft der Rückstellfedern 110, so dass der Steuerkörper 109 in den Ventilkanal 106 hinein gedrückt wird und diesen weiter verengt. Dadurch wird die Wirkung des Steuerfeldes verstärkt und der Stellbereich des Ventils 101 erweitert.

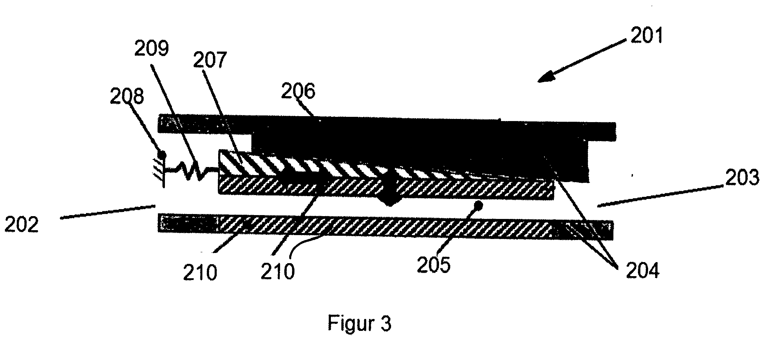

In den oben beschriebenen Ausführungsbeispielen der Erfindung erfolgt die Bewegung der Steuerkörper 7, 109 allein oder überwiegend durch den statischen Druck der feldsensitiven Flüssigkeit. Die Figuren 3 bis 7 zeigen Ausführungsbeispiele, bei denen die Bewegung der jeweiligen Steuerkörper auch oder ausschließlich durch dynamische Schubkräfte der feldsensitiven Flüssigkeit bewirkt wird.

Das in Figur 3 dargestellten Ventil 201 weist wiederum eine Zustromseite 202, eine Abstromseite 203 sowie ein Gehäuse 204 auf, welches einen Ventilkanal 205 einschließt. An einer Seite des Ventilkanals 205 weist das Gehäuse 204 eine schiefe Ebene 206 auf, an welcher ein Steuerkörper 207 gleitend anliegt.

Im Betrieb des Ventils 201 strömt eine feldsensitive Flüssigkeit durch den Ventilkanal 205. Durch Reibung an dem Steuerkörper 207 übt die Flüssigkeit eine in Strömungsrichtung wirkende Schubkraft auf den Steuerkörper 207 aus, die über eine an einem Widerlager 208 befestigte Rückstellfeder 209 aufgenommen wird.

An dem Steuerkörper 207 und an einer dem Steuerkörper 207 am Ventilkanal 205 gegenüber liegenden Stelle des Gehäuses 204 sind Koppelelemente 210 angeordnet.

Wird über die Koppelelemente 210 ein Steuerfeld in den Ventilkanal 205 eingekoppelt, so steigt die Viskosität der feldsensitiven Flüssigkeit an. Dadurch steigt auch die durch Reibung entstehende Schubkraft auf den Steuerkörper 207, so dass dieser unter Auslenkung der Rückstellfeder 209 in Strömungsrichtung der Flüssigkeit bewegt wird. Dabei wird der Steuerkörper 207 über die schiefe Ebene 206 in den Ventilkanal 205 gedrückt, so dass dieser sich verengt. Auch hier wird durch die Verengung des Ventilkanals 205 bei gleichzeitiger Erhöhung der Viskosität der feldsensitiven Flüssigkeit der verfügbare Stellbereich des Ventils 201 deutlich erhöht.

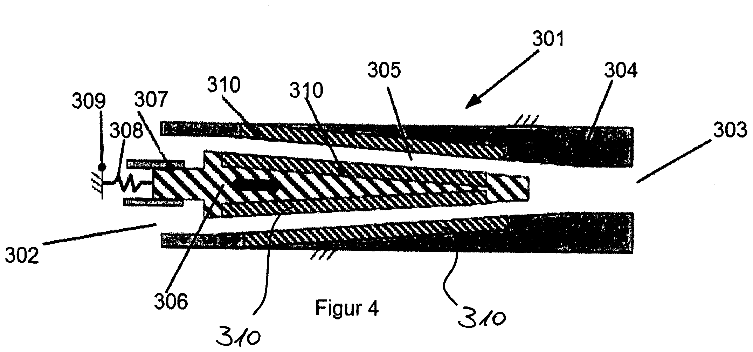

Figur 4 zeigt eine weitere Ausführungsvariante eines erfindungsgemäßen Ventils. Das Ventil 301 weist ebenfalls eine Zustromseite 302, eine Abstromseite 303 und ein Gehäuse 304 auf. Innerhalb des Gehäuses 304 ist ein sich in Strömungsrichtung konisch verjüngender Ventilkanal 305 ausgebildet, in dem ein sich ebenfalls in Strömungsrichtung konisch verjüngender Steuerkörper 306 bewegbar angeordnet ist. Zustromseitig ist der Steuerkörper 306 in einer Hülse 307 gleitend gelagert. Der Steuerkörper 306 ist über eine Rückstellfeder 308 an einem Widerlager 309 befestigt.

Im Betrieb strömt die feldsensitive Flüssigkeit entlang des Steuerkörpers 306 durch den Ventilkanal 305 und übt dabei eine in Richtung der Abstromseite 303 wirkende Schubkraft aus. Gleichzeitig entsteht entlang des Ventilkanals ein Druckgefälle, welches eine zusätzliche Kraft auf den Steuerkörper 306 bewirkt. Die im normalen Betrieb des Ventils 301 auf den Steuerkörper 306 wirkenden Kräfte werden von der Rückstellfeder 308 aufgenommen.

An der Innenseite des Ventilkanals 305 und an der Außenseite des Steuerkörpers 306 sind Koppelelemente 310 angeordnet, über welche ein Steuerfeld im Ventilkanal 305 erzeugt werden kann. Dadurch wird die Viskosität der Flüssigkeit erhöht und sowohl das Druckgefälle entlang des Ventilkanals 305 als auch die Schubkraft steigen an. Dies hat zu Folge dass der Steuerkörper 306 gegen die Kraft der Rückstellfeder 308 in Richtung der Abstromseite 303 bewegt wird. Hierdurch wird der Ventilkanal 305 verengt und somit die Wirkung des Steuerfeldes weiter verstärkt.

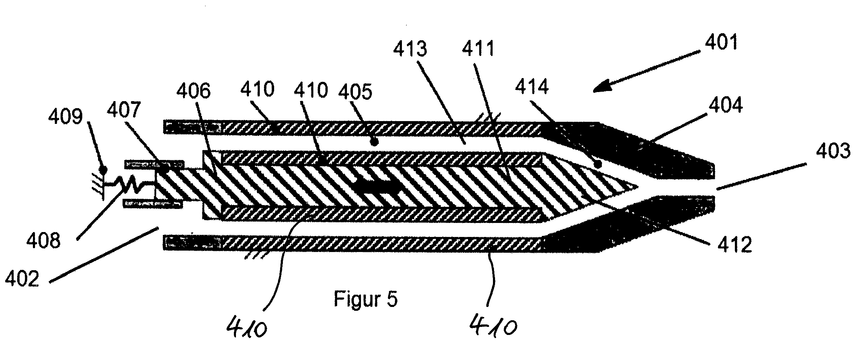

Figur 5 zeigt eine weitere Variante eines erfindungsgemäßen Ventils 401, welches in weiten Teilen mit der in Figur 4 dargestellten Variante übereinstimmt. Übereinstimmende Elemente sind daher lediglich mit einem um 100 erhöhten Bezugszeichen versehen und werden nicht weiter erläutert.

Bei den in den Figuren 2 bis 4 dargestellten Ausführungsbeispielen des erfindungsgemäßen Ventils geht mit der Bewegung der jeweiligen Steuerkörper auch eine Abstandsänderung zwischen den sich gegenüberliegenden Koppelelementen einher. Da einerseits zwischen den Koppelelementen bei Einkopplung des Steuerfeldes eine Kraft wirkt, was die Bewegung des Steuerkörpers je nach Ausrichtung des Steuerfeldes hemmt oder unterstützt, und andererseits eine Abstandsänderung zwischen den Koppelelementen eine Verstärkung oder Absenkung des Steuerfeldes verursacht, ist das Stellverhalten der dargestellten Ventile stark nichtlinear.

Es ist daher vorteilhaft, die Position des Steuerkörpers, den Druck der Flüssigkeit an verschiedenen Stellen im Ventil und/oder die Fließgeschwindigkeit der Flüssigkeit mittels nicht dargestellter Sensoren zu überwachen und darüber das Verhalten des Ventils zu regeln. Wegen der komplexen nichtlinearen Zusammenhänge empfehlen sich dazu z.B. adaptive Regelverfahren.

Im Gegensatz zu der in Figur 4 dargestellten Variante weist nun der Steuerkörper 406 bei der in Figur 5 gezeigten Variante des Ventils 401 einen zylindrischen Abschnitt 411 und einen konischen Abschnitt 412 auf. Dementsprechend verläuft der Ventilkanal 405 in einem ersten Abschnitt 413 zylindrisch und in einem zweiten Abschnitt 414 konisch. Die Koppelelemente 410 befinden sich dabei nur in dem zylindrischen Abschnitt des Steuerkörpers 406 und in dem zylindrischen Abschnitt des Gehäuses 404.

Durch diese Gestaltung ändert sich bei der Bewegung des Steuerkörpers 406 der Abstand in radialer Richtung zwischen den Koppelelementen 410 nicht, sondern lediglich im konischen Abschnitt 414 wird der Ventilkanal 405 verengt, wenn sich der Steuerkörper in Strömungsrichtung der feldsensitiven Flüssigkeit verschiebt. Da in dieser Variante der Abstand der Koppelelemente 410 konstant bleibt, ist das Ansprechverhalten des Ventils leichter zu regeln. Natürlich ist auch bei dieser und allen weiteren dargestellten Varianten der Einsatz eines oder mehrerer Sensoren sinnvoll, um das Stellverhalten des Ventils zu regeln.

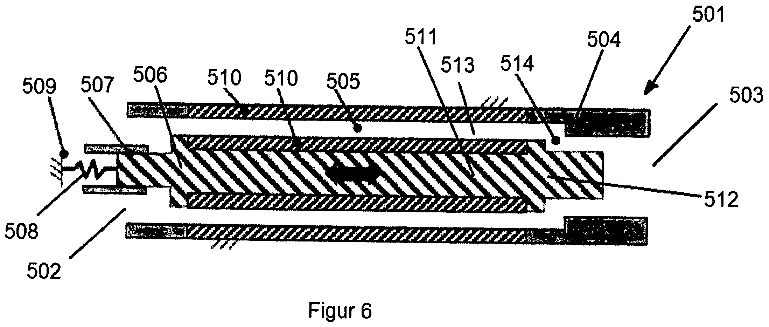

In Figur 6 ist eine weitere Variante eines erfindungsgemäßen Ventils dargestellt, welches im Wesentlichen der in Figur 5 dargestellten Variante entspricht. Elemente der Variante in Figur 6, die identisch zu Elementen der in Figur 5 dargestellten Variante sind, sind lediglich mit einem um 100 erhöhten Bezugszeichen versehen und werden nicht weiter erläutert.

Die Ausführungsform der Figur 6 unterscheidet sich von der Ausführungsform der Figur 5 dadurch, dass der Ventilkanal 505 abstromseitig einen stufenförmig verlaufenden Abschnitt 514 aufweist, welcher durch korrespondierende Stufen im Gehäuse 504 und im ablaufseitigen Ende 512 des Steuerkörpers 506 gebildet wird. Bewegt sich der Steuerkörper 506 in Strömungsrichtung der feldsensitiven Flüssigkeit, so wird der freie Strömungsquerschnitt blendenartig verändert. Das Gehäuse 504 und der Steuerkörper 506 sind dabei so dimensioniert, dass der größere Außendurchmesser des Steuerkörpers 506 mit wenig Spiel in den kleineren Innendurchmesser des Gehäuses 504 passt und somit den Ventilkanal 505 an seinem abstromseitigen Ende 514 vollständig verschließen kann.

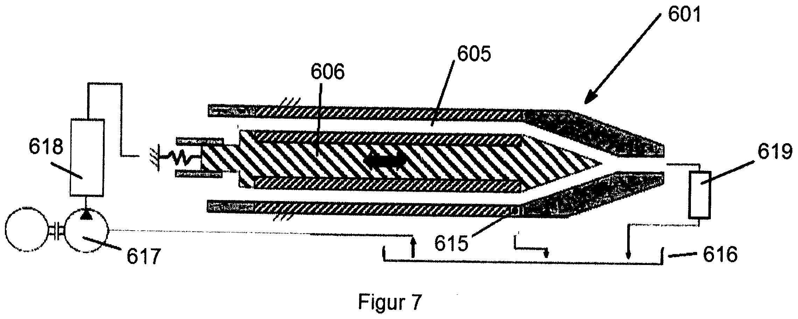

Figur 7 zeigt ein Hydrauliksystem mit einem Ventil gemäß einer Weiterbildung der in Figur 5 dargestellten Ausführungsform. Sich entsprechende Elemente werden daher nachfolgend nicht erneut erläutert.

In der dargestellten Ausführungsform ist der Ventilkanal 605 über eine Bypassleitung 615 mit einem Auffangbehälter 616 verbunden. Die Abstromseite des Ventilkanals 605 gelangt an einen Verbraucher 619 und wird nach Verlassen des Verbrauchers 619 ebenfalls dem Auffangbehälter 616 zugeführt. Der Auffangbehälter ist mit einer Pumpe 617 verbunden, welche die feldsensitive Flüssigkeit druckbeaufschlagt einem Reservoir 618 zuführt. Nach Durchströmen des Reservoirs 618 durchfließt die Flüssigkeit das Ventil 601, mit welchem der Druck in dem Verbraucher 619 gesteuert werden kann.

Abhängig von den Eigenschaften des Verbrauchers kann dieser auch an der Position 618 angeordnet sein. In diesem Fall ist 619 eine hydraulische Leitung oder ein hydraulischer Widerstand.

Die Bypassleitung 615 erlaubt es nun, das Ventil 601 vollständig zu schließen, so dass keine Flüssigkeit mehr zu dem Verbraucher 619 gelangt. Gleichzeitig ist aber weiterhin ein stetiger Strom der Flüssigkeit durch den Ventilkanal 605 gewährleistet, um einen Kurzschluss in der Flüssigkeit zu vermeiden. Zudem wird durch diesen Strom die Schubkraft auf den Steuerkörper 606 aufrecht erhalten, um das Ventil 601 sicher geschlossen zu halten.

Eine entsprechende Bypassleitung kann natürlich mit gleicher Wirkung und mit den gleichen Vorteilen auch in allen anderen Ausführungsbeispielen vorgesehen werden.

Die bislang beschriebenen Ausführungsbeispiele sind allesamt aktiv schließend ausgeführt, so dass bei nicht aktiviertem Steuerfeld das Ventil jeweils geöffnet ist. Für bestimmte Anwendungen, bei denen ein Ventil jeweils nur kurz geöffnet werden soll, kann es von Vorteil sein, ein aktiv öffnendes Ventil bereitzustellen.

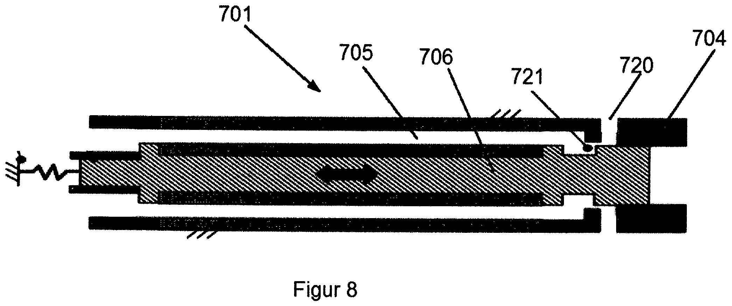

Figur 8 zeigt ein aktiv öffnendes Ausführungsbeispiel eines erfindungsgemäßen Ventils 701. Der Grundaufbau des Ventils 701 entspricht dabei im Wesentlichen den bereits beschriebenen Ausführungsbeispielen, so dass auf eine erneute Beschreibung verzichtet wird. Der Ventilkanal 705 ist an der Ablaufseite als seitlich aus dem Ventilgehäuse 704 führender Durchbruch 720 ausgeführt. Das ablaufseitige Ende des Steuerkörpers 706 schließt den Hauptzweig des Ventilkanals 705 ab.

Im Bereich vor dem Durchbruch 720 ist der Ventilkanal 705 so weit verengt, dass zwischen dem Gehäuse 704 und dem Steuerkörper 706 nur ein schmaler Durchgang verbleibt, durch welchen ein geringer, aber ständiger Strom der feldsensitiven Flüssigkeit durch das Ventil 701 fließen kann. Wird nun ein Steuerfeld in dem Ventilkanal 705 erzeugt, so steigt aufgrund der erhöhten Viskosität der feldsensitiven Flüssigkeit auch die auf den Steuerkörper 706 wirkende Schubspannung, wodurch der Steuerkörper in Richtung der Abstromseite ausgelenkt wird. Dabei gelangt eine im Steuerkörper 706 angeordnete Nut 721 in den Bereich der Verengung des Gehäuses 704 bzw. des Ventilkanals 705, so dass der freie Strömungsquerschnitt im Bereich der Nut 721 vergrößert ist und die feldsensitive Flüssigkeit mit verringertem Strömungswiderstand in den Durchbruch 720 strömen kann. Das Ventil 701 ist somit geöffnet. Dabei sollte die Querschnittsvergrößerung die durch das anliegende Steuerfeld angestiegene Viskosität überkompensieren.

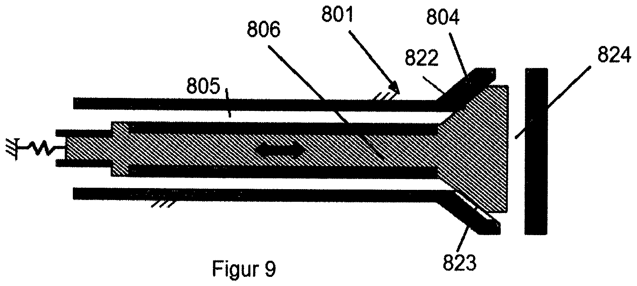

Figur 9 zeigt eine Abwandlung des in Figur 8 dargestellten Ventils, wobei das Gehäuse 804 und der Steuerkörper 806 des Ventils 801 abstromseitig konische Dichtflächen 822 aufweisen. In einer der Dichtflächen 822 ist dabei ein Bypasskanal 823 vorgesehen, durch welchen wiederum ein ständiger Strom der feldsensitiven Flüssigkeit in einen abstromseitigen Kanal 824 fließen kann.

Bei Einkopplung eines Steuerfeldes in den Ventilkanal 805 wird wiederum eine erhöhte Schubkraft auf den Steuerkörper 806 ausgeübt, so dass dieser in Strömungsrichtung der feldsensitiven Flüssigkeit bewegt wird. Hierdurch entfernen sich die Dichtflächen 822 des Gehäuses 804 und der Steuerkörpers 806 voneinander, der freie Strömungsquerschnitt vergrößert sich und das Ventil wird geöffnet. Dabei sollte die Querschnittsvergrößerung die gestiegene Viskosität infolge des Steuerfeldes überkompensieren.

Die in den Figuren 8 und 9 dargestellten Ventile können sich prinzipbedingt nicht vollständig schließen. Gleichzeitig ist es zum Öffnen dieser Ventile erforderlich, dass ein Steuerfeld in den Ventilkanal eingekoppelt wird, wodurch der maximal erreichbare Flüssigkeitsstrom begrenzt ist.

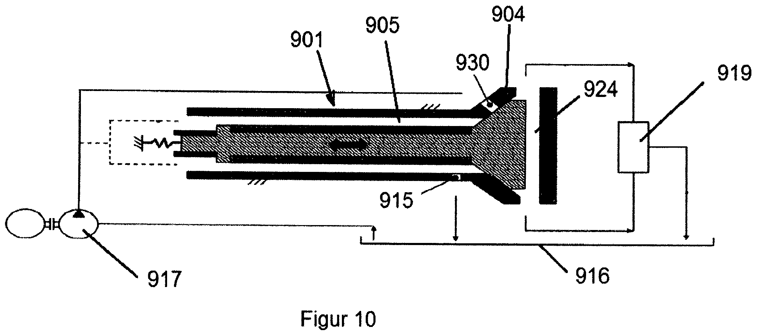

In Figur 10 ist ein Hydrauliksystem mit einer weiteren Variante eines aktiv öffnenden Ventils dargestellt, welche in dieser Hinsicht weiter verbessert ist.

Das Hydrauliksystem besteht aus einem Ventil 901, welches ähnlich zu den vorangehend beschriebenen Ventilen aufgebaut ist. Anders als in den zuvor beschriebenen Ausführungsbeispielen ist hier der Ventilkanal 905 über einen Steuerbypass 915 mit einem Auffangbehälter 916 verbunden. Auch hier fließt ein ständiger Strom der feldsensitiven Flüssigkeit durch den Ventilkanal 905, dieser gelangt aber nicht in den abstromseitigen Kanal 924, so dass das Ventil 901 im Ruhezustand vollständig geschlossen ist.

Wird ein Steuerfeld in den Ventilkanal 905 eingekoppelt, so steigt wie bereits zu den vorherigen Ausführungsbeispielen beschrieben die Schubspannung an dem Steuerkörper 906 und dieser wird in Strömungsrichtung bewegt. Dadurch wird das Ventil 901 geöffnet.

Um den durch das geöffnete Ventil 901 fließenden Strom der feldsensitiven Flüssigkeit weiter zu erhöhen, ist im abstromseitigen Bereich des Gehäuses 904 ein Nutzbypass 930 vorgesehen. Der Nutzbypass 930 ist direkt mit einer Pumpe 917 verbunden, welche die feldsensitive Flüssigkeit durch das Hydrauliksystem fördert. Auf diese Weise gelangt bei geöffnetem Ventil 901 ein Nutzstrom der Flüssigkeit ohne Beeinträchtigung durch das Steuerfeld von der Pumpe 917 durch den Nutzbypass 930 in den abstromseitigen Kanal 924 und dann an den Verbraucher 919. Nach Durchströmen des Verbrauchers 919 gelangt auch der Nutzstrom der Flüssigkeit in den Auffangbehälter 916 und wird von dort über die Pumpe 917 erneut in das Hydrauliksystem eingebracht.

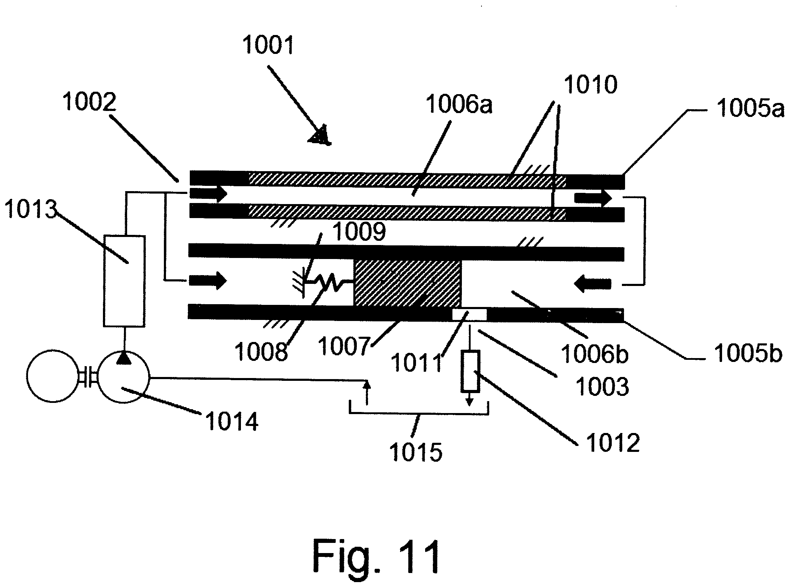

Figur 11 zeigt ein weiteres Ausführungsbeispiel der Erfindung mit einem mehrstufig ausgeführten Ventil 1001 mit einer Zustromseite 1002 und einer Abstromseite 1003. Das Ventil 1001 weist ein Gehäuse aus zwei Teilen 1005a, 1005b auf, welche einen zweiteiligen Ventilkanal 1006a, 1006b umschließen. Am ersten Gehäuseteil 1005a des Gehäuses sind wiederum Koppelelemente 1010 angeordnet, über welche ein Steuerfeld in den Ventilkanal 1006a des Ventils 1001 eingekoppelt werden kann. Im zweiten Teil 1006b des Ventilkanals ist ein Steuerkörper 1007 angeordnet, welcher über ein Federelement 1008 an einem Widerlager 1009 angelenkt ist. Der Steuerkörper 1007 deckt teilweise eine Ausströmöffnung 1011 des Ventils 1001 ab.

Im Betrieb wird die feldsensitive Flüssigkeit aus einem Auffangbehälter 1015 durch eine Pumpe 1014 in ein Reservoir 1013 gefördert. Aus dem Reservoir 1013 strömt die feldsensitive Flüssigkeit durch den Ventilkanal 1006a, 1006b und drückt dabei auf die Rückstell- bzw. federkraftbeaufschlagte Stirnfläche des Steuerkörpers 1007. Gleichzeitig wird die feldsensitive Flüssigkeit auf eine abgewandte Seite des Steuerkörpers 1007 im Abschnitt 1006b des Ventilkanals geführt. Wird nun ein Steuerfeld über die Koppelelemente 1010 in den Abschnitt 1006a des Ventilkanals eingekoppelt, so wird dadurch die Viskosität der feldsensitiven Flüssigkeit erhöht, so dass über dem Abschnitt 1006a des Ventilkanals ein Druckabfall entsteht. Der Druck auf der federkraftbeaufschlagten Seite des Steuerkörpers wird höher. Auf der abgewandten Seite des Steuerkörpers 1007 hingegen bleibt der Druck konstant. Es entsteht somit eine Druckdifferenz über dem Steuerkörper 1007, welche diesen gegen die Rückstell- bzw. Federkraft und in Richtung entgegen des Federelementes bewegt, wodurch eine Schließung der Ausströmöffnung 1011 erfolgt.

Durch die mehrstufige Ausführung des Ventils 1001 ist dieses in der Lage, über einen gegenüber einstufigen Ausführungen deutlich erhöhten Stellbereich zu agieren.

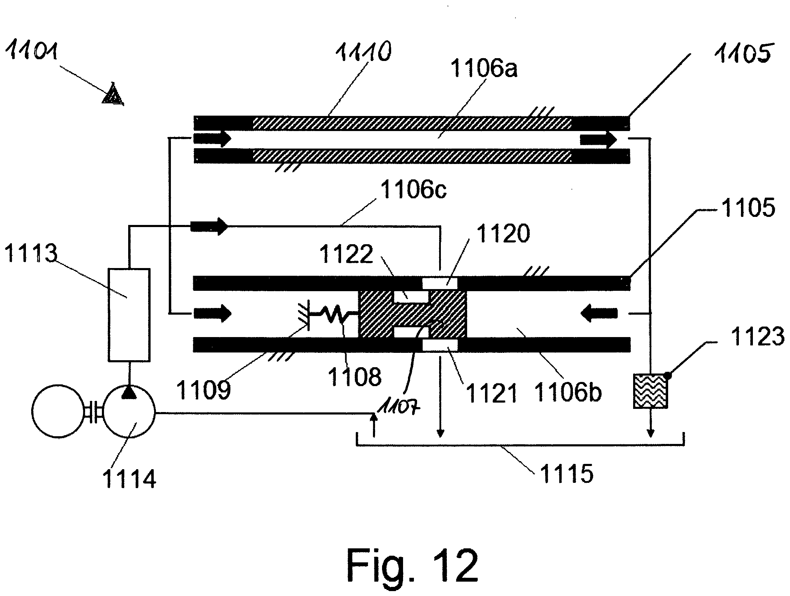

Figur 12 zeigt eine Abwandlung des in Figur 11 dargestellten Ventils. Das Ventil 1101 hat wiederum eine Zustromseite 1102 und eine Abstromseite 1103 und einen diese verbindenden, in diesem Fall dreiteiligen Ventilkanal 1106a, 1106b, 1106c. Das Ventil 1101 weist ein aus mehreren Teilen bestehendes Gehäuse 1105 auf. Der Nutzstrom einer feldsensitiven Flüssigkeit wird durch den Teil 1106c des Ventilkanals durch Querstromöffnungen 1120, 1121 durch den Teil 1106b des Ventilkanals geleitet. In diesem Teil 1106b des Ventilkanals ist ein Steuerkörper 1107 angeordnet, welcher die Querstromöffnungen 1120, 1121 teilweise verschließt. Der Steuerkörper 1107 weist eine umlaufende Nut 1122 auf, welcher eine Verbindung zwischen den Querstromöffnungen 1120,1121 herstellt. Der Steuerkörper 1107 ist wie in den anderen Ausführungen des Ventils über eine Feder 1108 an einem Widerlager 1109 befestigt.

Im Betrieb wird die feldsensitive Flüssigkeit aus einem Auffangbehälter 1115 durch eine Pumpe 1114 in ein druckbeaufschlagtes Reservoir 1113 gefördert. Aus diesem Reservoir 1113 strömt ein Teil der feldsensitiven Flüssigkeit als Steuerstrom durch den Teil 1106a des Ventilkanals, an welchem Koppelelemente 1110 zur Einkopplung eines Steuerfeldes angeordnet sind, und dann durch einen Zusatzwiderstand 1123 in den Auffangbehälter 1115 zurück. Der Zusatzwiderstand 1123 kann z.B. ein Rohrabschnitt mit definiertem Strömungswiderstand sein.

Stromaufwärts von dem Zusatzwiderstand 1123 zweigt der zweite Teil 1106b des Ventilkanals ab, welcher durch den Steuerkörper 1107 verschlossen ist. Auf der anderen Seite des Teils 1106b des Ventilkanals ist dieser mit dem Reservoir 1113 verbunden. Auf den Steuerkörper 1107 wirkt somit von einer Seite der in dem Reservoir 1113 herrschende Druck, von der anderen Seite nur der Druck, welcher über dem Zusatzwiderstand 1123 anliegt.

Solange der Strömungswiderstand des Zusatzwiderstandes 1123 deutlich größer ist als der des Teils 1106a des Ventilkanals, so wirkt praktisch keine Kraft auf den Steuerkörper 1107, und dieser liegt in seiner Ruhelage. Wird jetzt durch Einkoppeln eines Steuerfeldes der Widerstand im Teil 1106a des Strömungskanals erhöht, fällt der über dem Zusatzwiderstand 1123 anfallende Druck ab, und der Steuerkörper 1107 wird durch die sich ergebende Druckdifferenz gegen die Kraft der Feder 1108 ausgelenkt. Dadurch verändert sich der freie Querschnitt der Verbindung zwischen den Querstromöffnungen 1120, 1121 und der Strom der feldsensitiven Flüssigkeit durch den Teil 1106c des Ventilkanals wird somit gesteuert.

Durch entsprechende Wahl der Ruhelage des Steuerkörpers 1107 kann das Ventil 1101 entweder als aktiv öffnend oder als aktiv schließend ausgeführt werden, wobei durch die Trennung des Nutzstroms von dem Steuerstrom ein über einen weiten Bereich lineares Steuerverhalten des Ventils 1101 erreicht wird.

## Patentansprüche

1. Ventil für feldsensitive Flüssigkeiten mit einem Ventilkanal (6, 106, 205, 305, 405, 505, 605, 705, 805, 905, 1106a, 1106b, 1106a, 1106b, 1106c) und wenigstens einem Koppelelement (10, 112, 210, 310, 410, 510, 1010, 1110) zum Einkoppeln eines Steuerfeldes in den Ventilkanal (6, 106, 205, 305, 405, 505, 605, 705, 805, 1106a, 1106b, 1106a, 1106b, 1106c) zur steuernden Veränderung der Viskosität der im Ventilkanal strömenden Flüssigkeit, **dadurch gekennzeichnet, dass** das Ventil (1, 101, 201, 301, 401, 501, 601, 701, 801, 1001, 1101) einen gegen die Kraft eines Rückstellelementes (8, 110, 209, 308, 408, 508, 1008, 1108) zur Veränderung des Strömungsquerschnitts beweglichen Steuerkörper (7, 109, 207, 306, 406, 506, 606, 706, 806, 1007, 1107) aufweist, welcher durch Einwirkung der vom Steuerfeld in ihrer Viskosität beeinflussten feldsensitiven Flüssigkeit bewegbar ist, wobei die Bewegung des Steuerkörpers (7, 109, 207, 306, 406, 506, 606, 1007, 1107) durch den statischen Druck der in ihrer Viskosität beeinflussten feldsensitiven Flüssigkeit erfolgt.

2. Ventil nach Anspruch 1, **dadurch gekennzeichnet, dass** wenigstens ein Koppelelement (10, 112, 210, 310, 410, 510) an dem Steuerkörper (7, 109, 207, 306, 406, 506, 606) angeordnet ist.

3. Ventil nach Anspruch 2, **dadurch gekennzeichnet, dass** die Bewegung des Steuerkörpers (207, 306, 406, 506, 606, 706, 806) durch die Schubkraft des feldsensitiven Fluids erfolgt.

4. Ventil nach Anspruch 1, **dadurch gekennzeichnet, dass** der Steuerkörper (109) als eine Trennwand (109) zwischen dem Ventilkanal (106) und einer druckseitig mit dem Ventilkanal (106) verbundenen Druckkammer (107) ausgeformt ist.

5. Ventil nach Anspruch 1 oder 3, **dadurch gekennzeichnet, dass** der Steuerkörper (207) als Keil (207) ausgeführt ist, welcher durch die Einwirkung der feldsensitiven Flüssigkeit entlang einer schiefen Ebene (206) bewegbar ist.

6. Ventil nach Anspruch 1 oder 3, **dadurch gekennzeichnet, dass** der Steuerkörper (7, 306, 606) und der Ventilkanal (11, 305, 605) konisch ausgeführt sind und dass der Steuerkörper (7, 306, 606) durch Einwirkung der feldsensitiven Flüssigkeit zur Veränderung des freien Strömungsquerschnitts des Ventilkanals (11, 305, 605, 805) in Strömungsrichtung bewegbar ist.

7. Ventil nach Anspruch 6, **dadurch gekennzeichnet, dass** der Steuerkörper (306) im Bereich des Koppelelements (310) konisch ausgeführt ist.

8. Ventil nach Anspruch 6 oder 7, **dadurch gekennzeichnet, dass** der Steuerkörper (406, 606, 806) außerhalb des Bereichs des Koppelelements konisch ausgeführt ist.

9. Ventil nach Anspruch 1 oder 3, **dadurch gekennzeichnet, dass** der Ventilkanal (505) und der Steuerkörper (506) eine stufenförmige Verjüngung (514) aufweisen, welche als Strömungsblende wirkt.

10. Ventil nach einem der vorangehenden Ansprüche, **dadurch gekennzeichnet, dass** auf der Abstromseite des Steuerkörpers (606) von dem Ventilkanal (605) eine Bypassleitung (615) abzweigt.

11. Ventil nach einem der vorangehenden Ansprüche, **dadurch gekennzeichnet, dass** der Steuerkörper (7, 109, 207, 306, 406, 506, 606) gegen die Kraft des Rückstellelementes zur Verengung des freien Strömungsquerschnitts bewegbar ist.

12. Ventil nach einem dar Ansprüche 1 bis 10, **dadurch gekennzeichnet, dass** der Steuerkörper (706, 806) gegen die Kraft des Rückstellelementes zur Erweiterung des freien Strömungsquerschnitts bewegbar ist.

13. Hydraulische Anlage, **gekennzeichnet, durch** ein Ventil nach einem der vorhergehenden Ansprüche.

14. Hydraulische Anlage nach Anspruch 13, **dadurch gekennzeichnet, dass** ein Steuerhydraulikstrom und ein Nutzhydraulikstrom (1106c) getrennt voneinander ausgeführt sind, und das Ventil (1101) parallel zum Nutzhydraulikstrom (1106c) angeordnet ist.

## Claims

1. A valve for field sensitive liquids having a valve duct (6, 106, 205, 305, 405, 505, 605, 705, 805, 905, 1106a, 1106b, 1106a, 1106b, 1106c) and at least one coupling element (10, 112, 210, 310, 410, 510, 1010, 1110) for coupling a control field into the valve duct (6, 106, 205, 305, 405, 505, 605, 705, 805, 1106a, 1106b, 1106a, 1106b, 1106c) in order to change the viscosity of the liquid flowing in the valve duct in a controlling manner,
**characterised in that**
- the valve (1, 101, 201, 301, 401, 501, 601, 701, 801, 1001, 1101) has a control body (7, 109, 207, 306, 406, 506, 606, 706, 806, 1007, 1107) that is movable against the force of a restoring element (8, 110, 209, 308, 408, 508, 1008, 1108) in order to change the flow cross-section, said control body (7, 109, 207, 306, 406, 506, 606, 706, 806, 1007, 1107) being movable under the effect of the field sensitive liquid that is affected by the control field in its viscosity, wherein the movement of the control body (7, 109, 207, 306, 406, 506, 606, 1007, 1107) is achieved by the static pressure of the field sensitive liquid affected in its viscosity.

2. The valve in accordance with Claim 1 **characterised in that** at least one coupling element (10, 112, 210, 310, 410, and 510) is arranged on the control body (7, 109, 207, 306, 406, 506, and 606).

3. The valve in accordance with Claim 2 **characterised in that** the movement of the control body (207, 306, 406, 506, 606, 706, and 806) is achieved by the propulsive force of the field sensitive liquid.

4. The valve in accordance with Claim 1 **characterised in that** the control body (109) is moulded as a dividing wall (109) between the valve duct (106) and a pressure chamber (107) that is connected to the valve duct (106) on the pressure side.

5. The valve in accordance with Claim 1 or 3 **characterised in that** the control body (207) is designed as a wedge (207) which is movable along a ramp (206) under the effect of the field sensitive liquid.

6. The valve in accordance with Claim 1 or 3 **characterised in that** the control body (7, 306, 606) and the valve duct (11, 305, 605) are designed conically and that the control body (7, 306, 606) is movable in flow direction under the effect of the field sensitive liquid in order to change the free flow cross-section of the valve duct (11, 305, 605, 805).

7. The valve in accordance with Claim 6 **characterised in that** the control body (306) is designed conically in the vicinity of the coupling element (310).

8. The valve in accordance with Claim 6 or 7 **characterised in that** the control body (406, 606, and 806) is designed conically outside the vicinity of the coupling element.

9. The valve in accordance with Claims 1 or 3 **characterised in that** the valve duct (505) and the control body (506) have a stepped tapering (514) which acts as a flow orifice.

10. The valve in accordance with any one of the preceding claims **characterised in that** a bypass line (615) branches off from the valve duct (605) on the downstream side of the control body (606).

11. The valve in accordance with any one of the preceding claims **characterised in that** the control body (7, 109, 207, 306, 406, 506, and 606) is movable against the force of the restoring element in order to narrow the free flow cross-section.

12. The valve in accordance with any one of Claims 1 to 10 **characterised in that** the control body (706, 806) is movable against the force of the restoring element to extend the free flow cross-section.

13. A hydraulic system, **characterised by** a valve in accordance with any one of the preceding claims.

14. The hydraulic system in accordance with Claim 13 **characterised in that** a control hydraulic flow and a useful hydraulic flow (1106c) are conducted separately from each other and that the valve (1101) is arranged parallel to the useful hydraulic flow (1106c).

## Revendications

1. Soupape pour liquides sensibles aux champs avec un canal de soupape (6, 106, 205, 305, 405, 505, 605, 705, 805, 905, 1106a, 1106b, 1106a, 1106b, 1106c) et au moins un élément de couplage (10, 112, 210, 310, 410, 510, 1010, 1110) pour le couplage d'un champ de commande dans le canal de soupape (6, 106, 205, 305, 405, 505, 605, 705, 805, 1106a, 1106b, 1106a, 1106b, 1106c) pour la modification contrôlée de la viscosité du liquide s'écoulant dans le canal de soupape, **caractérisée en ce que** la soupape (1, 101, 201, 301, 401, 501, 601, 701, 801, 1001, 1101) présente un corps de commande (7, 109, 207, 306, 406, 506, 606, 706, 806, 1007, 1107) mobile pouvant, sous l'action du liquide sensible aux champs dont la viscosité est influencée par l'effet du champ de commande, être déplacé contre la force d'un élément de rappel (8, 110, 209, 308, 408, 508, 1008, 1108) pour modifier la section de passage, le déplacement du corps de commande (7, 109, 207, 306, 406, 506, 606, 1007, 1107) ayant lieu sous l'effet de la pression statique du liquide sensible aux champs dont la viscosité est influencée.

2. Soupape selon la revendication 1, **caractérisée en ce qu'**au moins un élément de couplage (10, 112, 210, 310, 410, 510) est agencé auprès du corps de commande (7, 109, 207,306,406,506,606).

3. Soupape selon la revendication 2, **caractérisée en ce que** le mouvement du corps de commande (207, 306, 406, 506, 606, 706, 806) a lieu sous l'action de la poussée du liquide sensible aux champs.

4. Soupape selon la revendication 1, **caractérisée en ce que** le corps de commande (109) est réalisé sous forme de cloison de séparation (109) entre le canal de soupape (106) et une chambre de pression (107) reliée, côté pression, au canal de soupape (106).

5. Soupape selon la revendication 1 ou 3, **caractérisée en ce que** le corps de commande (207) est réalisé sous forme de coin (207) pouvant, sous l'action du liquide sensible aux champs, se déplacer le long d'un plan incliné (206).

6. Soupape selon la revendication 1 ou 3, **caractérisée en ce que** le corps de commande (7, 306, 606) et le canal de soupape (11, 305, 605) sont de conformation conique et que le corps de commande (7, 306, 606) peut, sous l'action du liquide sensible aux champs, se déplacer dans le sens d'écoulement pour modifier la section de passage libre du canal de soupape (11,305,605,805).

7. Soupape selon la revendication 6, **caractérisée en ce que** le corps de commande (306) est de conformation conique au niveau de l'élément de couplage (310).

8. Soupape selon la revendication 6 ou 7, **caractérisée en ce que** le corps de commande (406, 606, 806) est de conformation conique en dehors de la zone de l'élément de couplage.

9. Soupape selon la revendication 1 ou 3, **caractérisée en ce que** le canal de soupape (505) et le corps de commande (506) présentent un effilement étagé (514) agissant comme un diaphragme d'écoulement.

10. Soupape selon l'une des revendications précédentes, **caractérisée en ce que,** côté aval du corps de commande (606), un conduit de dérivation (615) part du canal de soupape (605).

11. Soupape selon l'une des revendications précédentes, **caractérisée en ce que** le corps de commande (7, 109, 207, 306, 406, 506, 606) peut se déplacer contre la force de l'élément de rappel pour réduire la section de passage libre.

12. Soupape selon l'une des revendications 1 à 10, **caractérisé en ce que** le corps de commande (706, 806) peut se déplacer contre la force de l'élément de rappel pour augmenter la section de passage libre.

13. Installation hydraulique **caractérisée par** une Soupape selon l'une des revendications précédentes.

14. Installation hydraulique selon la revendication 13, **caractérisée en ce que** l'on a un courant hydraulique de commande et un courant hydraulique utile (1106c) séparés et que la soupape (1101) est agencée parallèlement au courant hydraulique utile (1106c).
